# FASCICULE DE BREVET EUROPEEN

(11) **EP 4 030 331 B1**
(45) Date de publication et mention de la délivrance du brevet: **30.09.2026**
(21) Numéro de dépôt: 22151375.7
(22) Date de dépôt: 13.01.2022
(51) Int. Cl.: G06F 21/64, H04L 9/40

(54) **SYSTÈME DE TRANSFERT SÉCURISÉ DE DONNÉES NUMÉRIQUES D'AÉRONEF, SYSTÈME PRODUCTEUR DE DONNÉES, SYSTÈME CONSOMMATEUR DE DONNÉES, ET PROCÉDÉ DE TRANSFERT ASSOCIÉ**
SYSTEM ZUR GESICHERTEN ÜBERTRAGUNG VON DIGITALEN LUFTFAHRZEUGDATEN, DATENERZEUGUNGSSYSTEM, DATENNUTZUNGSSYSTEM UND ENTSPRECHENDES ÜBERTRAGUNGSVERFAHREN
SYSTEM FOR SECURE TRANSFER OF DIGITAL DATA OF AN AIRCRAFT, DATA PRODUCTION SYSTEM, DATA CONSUMPTION SYSTEM AND ASSOCIATED TRANSFER METHOD

(30) Priorité: 13.01.2021 FR 2100285
(43) Date de publication de la demande: 20.07.2022
(73) Titulaire: Dassault Aviation, 92210 Saint-Cloud (FR)
(72) Inventeur: BRUILLOT, Serge, 92214 SAINT CLOUD (FR); DIGNIMONT, Patrick, 92214 SAINT CLOUD (FR); CAPPELLE, Jérôme, 92214 SAINT CLOUD (FR)
(74) Mandataire: Lavoix

(56) Documents cités:
- CN-A- 106 850 377
- CN-A- 110 198 202
- CN-B- 102 124 680
- US-A1- 2011 055 564
- US-A1- 2013 208 630
- US-B2- 10 791 125
- ABACO SYSTEMS: "AFDX/ARINC 664 Protocol - White paper", WHITE PAPERS OF ABACO SYSTEMS, 1 January 2016 (2016-01-01), pages 1 - 22, XP055472976, Retrieved from the Internet <URL:https://www.abaco.com/system/files/files/afdx-arinc_664_protocol_a-wp-604a.pdf> [retrieved on 20180507]

## Description

La présente invention concerne un système de transfert de données d'aéronef, comportant :
- un système producteur de données, propre à élaborer, à des instants successifs, des données ;
- au moins un système consommateur de données, propre à recevoir et à utiliser les données produites par le système producteur de données ;
   l'un au moins du système producteur de données et du ou de chaque système consommateur de données étant embarqué au sein d'un aéronef ;
- un lien de transfert de données entre le système producteur de données et le ou chaque système consommateur de données.

US10791125 décrit un système de transfert de données sécurisé au sein d'un véhicule automobile. CN110198202 décrit un système de transfert de données d'aéronef utilisant un procédé AFDX.

US2013/0208630 décrit un système de transfert de données sécurisé comprenant des systèmes producteurs de données et des systèmes consommateurs de données raccordés par un lien de transfert de données.

Le système de transfert de données est destiné à assurer un transfert sécurisé de données numériques au sein d'un aéronef, depuis l'aéronef vers au moins un système consommateur de données extérieur à l'aéronef (tel qu'au moins un autre aéronef, une station de contrôle au sol dans le cas d'un drone, etc.), ou/et depuis un système producteur de données extérieur à l'aéronef (par exemple un autre aéronef, un système de préparation de mission, un système de téléchargement de données, etc.) vers l'aéronef.

Il est destiné à être utilisé notamment entre un système producteur de données et un ou plusieurs systèmes consommateurs de données situés à distance l'un de l'autre. Le système de transfert de données est aussi utilisable au sein d'un même système avion, notamment entre différents calculateurs d'un même système avion, entre un applicatif producteur d'un équipement tel un capteur et un ou plusieurs calculateurs, entre plusieurs couches applicatives d'un même calculateur, ou encore entre des cœurs différents d'un même processeur.

Le système de transfert est destiné à être mis en œuvre indépendamment du nombre de liaisons numériques de transfert de données entre chaque système producteur de données et chaque système consommateur de données et indépendamment de la nature de celles-ci au niveau de l'architecture globale de transmission de données.

Dans un aéronef, de nombreux systèmes avions sont propres à engendrer des données fonctionnelles. Ceci est le cas par exemple des systèmes de capteurs de mesure de paramètres, les paramètres étant internes ou externes à l'aéronef, ou des systèmes avioniques, en particulier de systèmes de pilotage, de commande ou de guidage de l'aéronef.

Les données fonctionnelles sont par exemple des mesures de paramètres avion, des ordres de commande de systèmes avion, ou des données de suivi de systèmes avion.

Les données fonctionnelles sont souvent utilisées par d'autres systèmes avion, ou par d'autres couches applicatives d'un même système avion. Elles sont donc transférées entre un système producteur de données et au moins un système consommateur de données qui peut être situé à distance, voire à l'extérieur de l'aéronef ou dans d'autres couches applicatives.

Des protocoles de transfert de données numériques sont largement utilisés au sein des aéronefs.

Certains protocoles de « bas niveau » transmettent les données numériques sous forme de mots de données dans chacun desquels sont codés des informations de gestion du protocole et des informations fonctionnelles. Ceci est le cas par exemple du protocole ARINC 429.

Des protocoles plus évolués, tels que le protocole GAM-T-101 (Digibus), le protocole MIL-STD-1553B, ou le protocole Ethernet et ses dérivés dits déterministes (ARINC664 Part 7 ou SAE AS6802 ou TSN), mettent en œuvre des messages qui permettent l'émission atomique de plusieurs mots de données, certains contenant exclusivement des informations de gestion du protocole et les autres exclusivement des informations fonctionnelles.

Dans tous les cas, il est essentiel dans le domaine aéronautique de s'assurer de l'intégrité des données transmises.

Dans l'exemple du protocole ARINC 429, les données fonctionnelles sont transmises sous forme d'une suite de bits via des mots ARINC429, dont la taille est limitée à 32 bits.

Chaque mot ARINC 429 comporte un identificateur de données (ID) appelé label, un identifiant de la source ayant émis la donnée (SDI), les données fonctionnelles (D), et un identifiant de validité des données émises par le système producteur (SSM).

Le protocole ARINC 429 permet la transmission de données dites fonctionnelles sous la forme de motifs « label-data » et dans ce qui suit, comme communément employé, « label » pourra désigner le mot ARINC 429 complet.

Pour vérifier l'intégrité des données fonctionnelles après leur transmission, chaque mot ARINC 429 comporte un outre un bit de vérification de parité (P), résultant de la somme en binaire des bits des données fonctionnelles. Le bit de parité est calculé lors du codage des données en mots ARINC 429 dans la couche de transmission de données

Lors de la récupération des données contenues au sein d'un mot ARINC 429, le système consommateur est apte à recalculer la parité des données fonctionnelles qu'il reçoit et à vérifier qu'elle est identique à celle du bit de parité contenu dans le mot ARINC 429.

Néanmoins, ce test d'intégrité est souvent un indicateur insuffisant pour constater une perte d'intégrité du paquet de données fonctionnelles au cours du transfert.

Ainsi, si deux bits du paquet de données fonctionnelles sont erronés, la somme peut donner une parité correspondant à celle du bit de vérification, alors que le paquet de données fonctionnelles a été doublement corrompu.

Un tel protocole peut donc être utilisé lorsque les données transmises sont d'importance moindre, ou ne sont pas critiques pour la sécurité et la conduite de l'aéronef.

Si les données sont importantes ou critiques, il est nécessaire d'utiliser des systèmes producteurs redondants, qui élaborent en parallèle des données et de les transmettre en parallèle vers un ou plusieurs systèmes consommateurs. Le ou les systèmes consommateurs reçoivent les données des différents systèmes producteurs et appliquent des stratégies de sélection ou de vote, pour assurer que les données sont intègres. Une telle solution est sûre, mais augmente la masse, le coût et la complexité de l'aéronef.

Un but de l'invention est de fournir un système de transfert de données d'aéronef entre un système producteur de données fonctionnelles et au moins un système consommateur de ces données, qui soit simple et facilement adaptable à un protocole de transfert de données existant, et qui soit suffisamment sûr dans le cas où l'erroné de ces données peut avoir des conséquences catastrophiques.

À cet effet, l'invention a pour objet un système de transfert de données selon la revendication 1.

Le système selon l'invention peut comprendre l'une ou plusieurs des caractéristiques des revendications 2 à 9 ou des caractéristiques suivantes, prise(s) isolément ou suivant toute combinaison techniquement possible :
- la pluralité de mots comprend au moins deux mots distincts de vérification d'intégrité, chaque mot de vérification d'intégrité contenant une partie du résultat de contrôle d'intégrité ;
- la fréquence de transfert des capsules ou la fréquence de réception des capsules est supérieure à la fréquence d'élaboration des capsules, le système consommateur de données étant propre à maintenir au moins une capsule de données dans un état de rafraichissement attendu même si l'incrément de rafraichissement est nul ;
- si la fréquence d'élaboration de capsules ou la fréquence de transfert de capsules est supérieure à la fréquence de réception de capsules, le système consommateur de données est propre à placer dans un état de rafraichissement attendu au moins une capsule de données même si l'incrément de rafraichissement est supérieur à 1 ;
- le résultat de contrôle d'intégrité est une somme de contrôle ou un code de redondance cyclique.

L'invention a également pour objet un système producteur de données selon la revendication 10.

L'invention a aussi pour objet un système consommateur de données selon la revendication 11.

L'invention a également pour objet un procédé de transfert de données d'aéronef selon la revendication 12.

Le procédé selon l'invention peut comprendre l'une ou plusieurs des caractéristiques des revendications 13 ou 14, prise(s) isolément ou suivant toute combinaison techniquement possible..

L'invention sera mieux comprise à la lecture de la description qui va suivre, donnée uniquement à titre d'exemple, et faite en se référant aux dessins annexés, sur lesquels :
- [Fig. 1] la figure 1 est une représentation schématique d'un système de transfert de données d'aéronef selon l'invention;
- [Fig. 2] la figure 2 est une représentation schématique du contenu d'une capsule utilisée pour transférer des données au sein du système de transfert de la figure 1 ;
- [Fig. 3] la figure 3 est une représentation schématique illustrant la structure d'une capsule émise via un protocole de transmission utilisant des mots, dans un exemple où l'identifiant et l'indicateur de rafraichissement sont placés dans le même mot ;
- [Fig. 4] la figure 4 est une vue détaillée de la représentation d'un mot du protocole ARINC 429 ;
- [Fig. 5] la figure 5 est une vue d'une représentation mémoire d'une suite de mots formant une capsule, en vue de mettre en œuvre un test d'intégrité ;
- [Fig. 6] la figure 6 est une vue analogue à la figure 1 d'une variante de système de transfert de données selon l'invention.

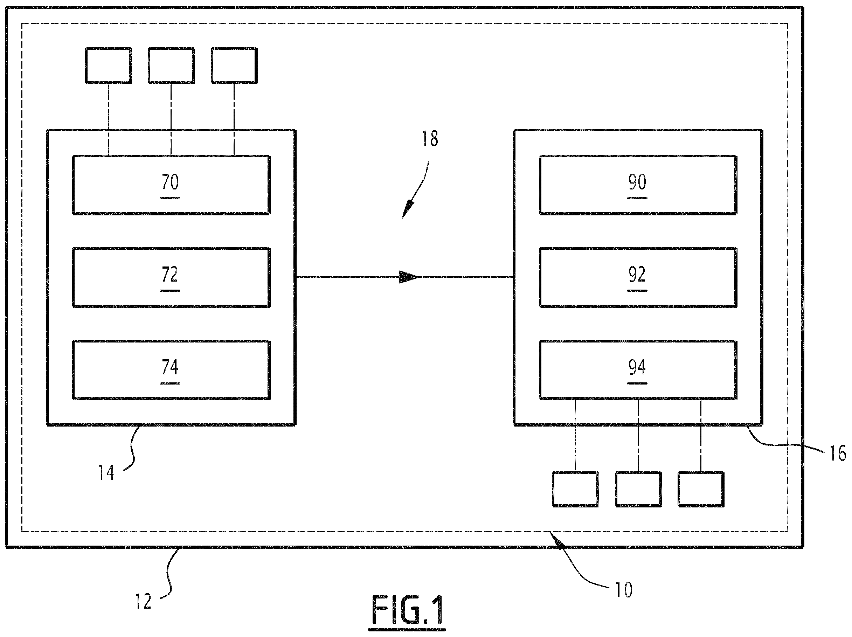

Un premier système 10 de transfert de données selon l'invention d'aéronef 12 est illustré schématiquement par la figure 1.

L'aéronef 12 est par exemple un avion d'affaires, un avion militaire, un avion de transport de passagers ou de marchandises, ou le véhicule aérien d'un drone.

Les données transférées par le système 10 sont des données fonctionnelles produites ou reçues dans l'aéronef, par exemple des résultats de mesures physiques de capteurs de l'aéronef, des données d'ordres de commande de systèmes de l'aéronef, des données de suivi d'états de systèmes de l'aéronef, des données avioniques.

Ces données fonctionnelles sont transportées et codées en binaire sous forme de chaînes de bits.

En référence à la figure 1, le système de transfert 10 comporte un système producteur de données 14, au moins un système consommateur de données 16 et un lien 18 de transfert de données entre le système producteur 14 et le ou chaque système consommateur 16.

Le système producteur de données 14 et le système consommateur de données 16 sont par exemple deux systèmes avions distincts de l'aéronef 12. Le lien de transfert de données 18 est alors une liaison de transmission présente dans l'aéronef 12, telle qu'une liaison physique de transmission de données à travers un réseau de câbles.

En variante, au moins un système consommateur de données 16 est extérieur à l'aéronef 12. Il est par exemple situé dans un autre aéronef, une station de contrôle au sol dans le cas d'un drone, etc.

En variante encore, le système producteur de données 14 est extérieur à l'aéronef 12. Il est par exemple situé dans un autre aéronef, dans un système de préparation de mission, dans un système de téléchargement de données.

Dans ces deux derniers cas, le lien de transfert de données 18 comporte au moins une liaison de transmission de données sans fil depuis l'aéronef 12 ou/et vers l'aéronef 12.

Le système producteur de données 14 et le système consommateur de données 16 comprennent alors chacun au moins une ressource de calcul comportant au moins un processeur et au moins une mémoire contenant des modules logiciels propres à être exécutés par le processeur.

En variante, les systèmes 14, 16 sont réalisés au moins partiellement sous forme de composants logiques programmables, ou encore sous forme de circuits intégrés dédiés.

Dans une variante (non représentée), le système producteur de données 14 et le système consommateur de données 16 sont situés au sein du même système avion, voire dans la même ressource de calcul du système avion, par exemple au niveau de deux couches applicatives distinctes de la même ressource de calcul avion ou dans deux cœurs différents du même processeur.

Le système producteur de données 14 est propre à élaborer des données fonctionnelles à des instants successifs, en les engendrant lui-même ou en les recevant d'une source de données fonctionnelles.

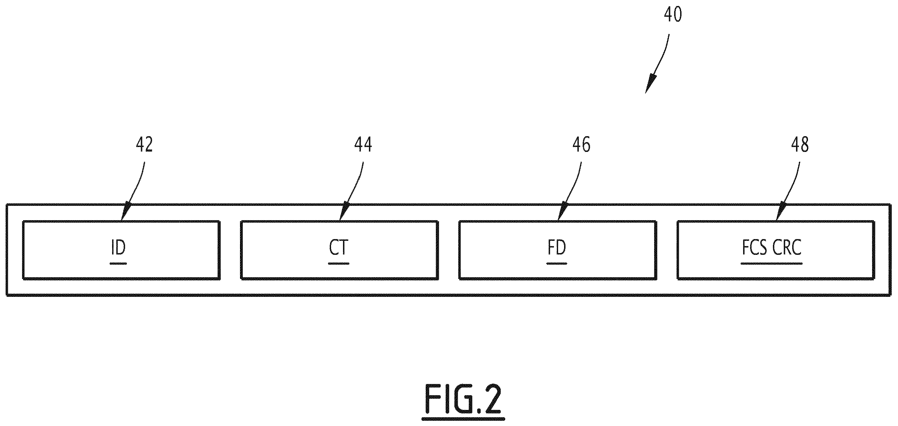

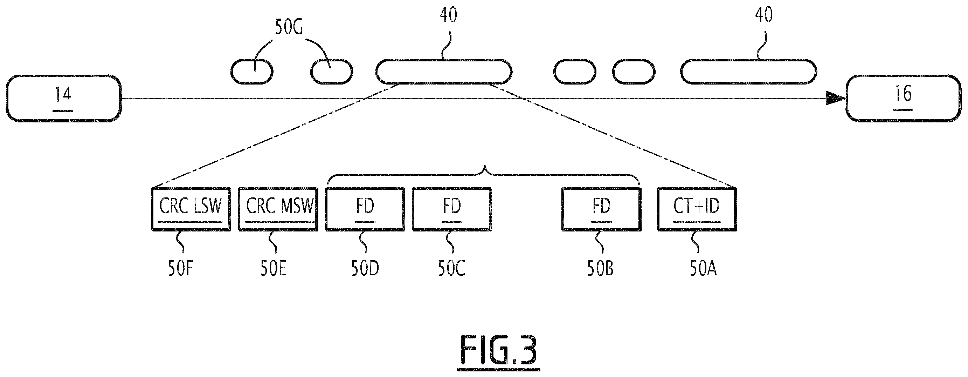

Selon l'invention, le système producteur de données 14 est propre à transmettre les données élaborées au système consommateur de données 16 par l'intermédiaire du lien de transfert 18, en encapsulant les données fonctionnelles élaborées aux instants successifs dans des capsules 40 successives, dont le contenu et la structure sont illustrés respectivement par les figures 2 et 3.

Comme illustré par la figure 2, chaque capsule 40 comporte un identifiant de capsule 42, un indicateur de rafraichissement 44, mis à jour par le système producteur de données 14 à chaque élaboration de données fonctionnelles, indépendamment de la fréquence de transmission des données dans le lien de transfert 18, un paquet 46 de données fonctionnelles élaborées par le système producteur de données 14 lors d'une élaboration fonctionnelle de données, et un résultat 48 de contrôle d'intégrité, calculé à partir de l'identifiant 42, de l'indicateur de rafraichissement 44 et du paquet de données 46 de la capsule 40.

L'identifiant de capsule 42 est par exemple une chaine de bits permettant d'identifier le système producteur des données 14 ou/et une entité ayant produit les données fonctionnelles au sein du système producteur de données 14. L'identifiant de capsule 42 permet notamment au ou à chaque système consommateur de données 16, à partir d'une sémantique prédéfinie ou/et d'une table de correspondance, d'identifier le producteur des données et le contenu fonctionnel du paquet de données et ainsi de mettre en œuvre un contrôle d'authentification pour s'assurer que les données ont bien été produites par le système producteur des données 14 attendu.

L'identifiant de capsule 42 permet d'associer de manière bijective la capsule 40 à un système de transfert 10 considéré (mis en œuvre dans un aéronef 12, plusieurs aéronefs, un ou plusieurs aéronefs et des moyens externes à l'aéronef 12), indépendamment du nombre de liaisons de transfert 18 et de la nature de celles-ci au niveau de l'architecture globale de transmission.

Ainsi, à partir de l'identifiant de capsule 42 associé à la capsule 40, il est possible, à partir d'une sémantique prédéfinie ou/et d'une table de correspondance, d'attribuer la capsule 40 à un système de transfert 10 donné incluant un système producteur de données 14 et au moins un système consommateur de données 16.

En outre, si les capsules 40 engendrées par un système producteur de données 14 ou/et par une entité au sein du système producteur de données 14 sont toutes de structures identiques, le système consommateur de données 16 est propre à identifier la position du paquet de données 46 dans la capsule 40, la longueur du paquet de données 46 et la position du résultat de contrôle d'intégrité 48, à partir de l'identifiant de capsule 42.

L'indicateur de rafraichissement 44 est une chaine de bits codant un numéro d'ordre d'élaboration des données fonctionnelles à chaque élaboration de données fonctionnelles. L'indicateur de rafraichissement 44 est par exemple un compteur ou un décompteur généralement mis à jour unitairement à chaque élaboration de données fonctionnelles. Il permet d'associer, à chaque capsule 40 transmise, une mesure de rafraîchissement des données. Cette mesure permet de s'assurer que les données fonctionnelles récupérées par le système consommateur de données 16 ont bien été rafraîchies par le système producteur de données 14, constituant un contrôle de rafraichissement.

Le paquet de données 46 est une chaine de bits codant les données fonctionnelles générées lors de l'élaboration de données fonctionnelles associée à l'indicateur de rafraichissement 44.

Le résultat de contrôle d'intégrité 48 est une chaine de bits codant un nombre de contrôle calculé par un traitement mathématique, à partir d'une représentation fonctionnelle intégrant l'identifiant 42 de la capsule 40, l'indicateur de rafraichissement 44 de la capsule 40, et les données fonctionnelles 46 de la capsule 40.

De préférence, le résultat de contrôle d'intégrité 48 est le résultat d'une somme de contrôle, ou d'un code de redondance cyclique (CRC). Le traitement mathématique est par exemple un algorithme choisi en fonction des objectifs de sécurité à atteindre, de la longueur minimale/maximale du paquet de données 46, de l'identifiant 42, de l'indicateur de rafraichissement 44, et de la fiabilité de la liaison de données, en terme de taux d'erreur de bits (en anglais BER, pour « Bit Error Rate »). Des exemples d'algorithmes utilisés sont décrits dans le document DOT/FA/TC-14/49 de l'Administration Fédérale d'Aviation des Etats-Unis d'Amérique, mars 2015, disponible à l'adresse suivante : https://www.faa.gov/aircraft/air_cert/design_approvals/air_software/media/TC-14-49.pdf.

Dans l'exemple représenté sur la figure 1, le lien de transfert de données 18 est une liaison mettant en œuvre un protocole de transfert de données utilisant des mots 50 contenant des informations de gestion du protocole de transmission et des informations fonctionnelles, vues de ce protocole.

Dans une variante, qui sera décrite plus bas, le lien de transfert de données 18 est une liaison mettant en œuvre un protocole de transfert de données utilisant des messages qui permettant l'émission atomique de plusieurs mots 50, certains contenant exclusivement des informations de gestion du protocole de transmission et les autres exclusivement des informations fonctionnelles, vues de ce protocole.

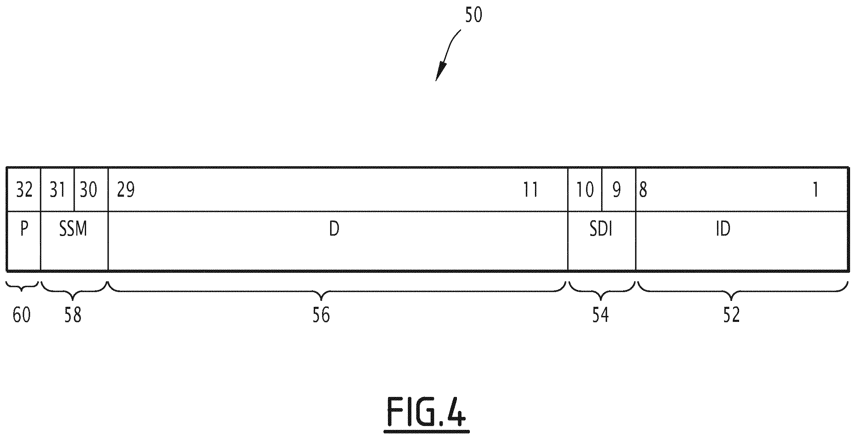

Un exemple de protocole de transfert de données utilisant des mots 50 est représenté sur la figure 4. Ce protocole est avantageusement mis en œuvre dans une liaison ARINC 429.

Chaque mot 50 est défini par une suite de bits, présentant un nombre prédéfini de bits. Le mot 50 pour l'ARINC 429, comporte trente-deux bits. Comme expliqué plus haut, il est communément désigné par le terme « mot ARINC 429 », voire « label ».

Le mot 50 est découpé en des champs distincts. Dans l'exemple représenté sur la figure 4, le mot 50 comporte un champ 52 d'identification du mot (ID), et avantageusement, un champ 54 d'identification du récepteur ou/et du sous-système ayant émis la donnée (champ optionnel SDI dans la norme ARINC 429). Le mot 50 comprend en outre un champ 56 contenant les données (D) transportées par le mot, un champ 58 de validité de données (SSM) ou de signe/sens (ex : +/- ou Nord/Sud, Est/Ouest), et un champ (P) de parité 60.

Le champ 52 contient une identification du mot, avec une sémantique normalisée définie lors de l'élaboration du mot.

Le champ 54 (optionnel) est destiné généralement à définir à quel récepteur de la donnée est destiné le mot, ou quel sous-système de l'émetteur a émis la donnée.

Le champ 56 contient les données devant être transmises par le mot 50. Dans cet exemple il comporte dix-neuf bits.

Le champ 58 contient un identifiant de validité des données, engendré par le système producteur de données 14, pouvant permettre d'identifier si le système producteur de données 14 considère que les données sont valables ou si au contraire il considère qu'elles ne sont plus valables.

Le champ de parité 60 est d'un calcul de la somme binaire de tous les bits des champs 52, 54, 56 et 58 pour déterminer la parité de la somme.

Dans le cas où le lien de transfert 18 est une liaison mettant en œuvre des mots 50, la taille de la capsule 40 est généralement supérieure à la taille du champ 56 des données transportées par un mot 50.

Comme illustré par la figure 3, la capsule 40 est ainsi émise sur une pluralité de mots distincts 50A à 50F en répartissant l'identifiant 42, l'indicateur de rafraichissement 44, les données fonctionnelles 46 et le résultat de contrôle d'intégrité 48 dans les champs 56 de plusieurs mots 50A à 50F.

De préférence, au moins un premier mot 50A d'identification contient l'identifiant 42 de la capsule 40 et éventuellement, l'indicateur de rafraichissement 44. Avantageusement, le mot 50A contient à la fois l'identifiant 42 de la capsule 40, et l'indicateur de rafraichissement 44.

De préférence, pour limiter la bande passante consommée, l'identifiant 42 de la capsule 40 est formé par le champ 52 d'identification du mot 50A, et par le champ 54 d'identification du récepteur ou/et du sous-système ayant émis la donnée. Ceci est possible en établissant une table de correspondance entre chaque capsule 40 et les identifiants successifs des mots 50A à 50F utilisés pour émettre la capsule 40.

Par exemple, si chaque capsule 40 correspondant à une élaboration de données fonctionnelle est émise sur N mots 50, les N identifiants successifs des N mots 50 sont associés à la capsule 40.

L'indicateur de rafraichissement 40 est codé sous forme binaire dans le champ 56 du mot 50A, par exemple en utilisant 16 des 19 bits disponibles dans le champ 56.

Dans une variante (non représentée), le mot 50A contient l'identifiant 42 de la capsule 40, par exemple dans le champ 56 et un autre mot d'identification (non représenté) distinct du mot 50A contient l'indicateur de rafraichissement 44 dans le champ 56.

En fonction de la taille du paquet de données fonctionnelles 46 produit à chaque élaboration de données fonctionnelles, le paquet de données fonctionnelles 46 est émis sur au moins un mot de données fonctionnelles 50B à 50D, généralement sur plusieurs mots de données fonctionnelles 50B à 50D.

Les données du paquet de données fonctionnelles 46 sont réparties sur les champs 56 du ou des mots 50B à 50D qui contiennent uniquement des données fonctionnelles.

Les mots 50B à 50D de données fonctionnelles ne contiennent pas l'indicateur de rafraichissement 44 ou le résultat du test d'intégrité 48. L'identifiant de chaque mot 50B à 50D permet d'identifier à quelle capsule 40 appartiennent les données fonctionnelles contenues dans le champ 56 du mot 50B à 50D.

Le résultat de contrôle d'intégrité 48 de chaque capsule 40 est émis sur au moins un mot de vérification d'intégrité 50E, 50F, avantageusement sur deux mots de vérification d'intégrité 50E, 50F, lorsqu'il comporte trente-deux bits, alors que le champ 56 de chaque mot 50E, 50F contient uniquement 19 bits.

La capsule 40 ainsi créée est ensuite transférée via le lien de transfert 18 en la répartissant sur plusieurs mots 50A à 50F, pour s'adapter au protocole de transfert présent dans l'aéronef 12.

A cet effet, en référence à la figure 1, le système producteur de données 14, comporte un module 70 d'élaboration de données fonctionnelles 46 et d'association avec un identifiant 42 de capsule 40 et avec un indicateur de rafraichissement 44, un module 72 de calcul d'un résultat de contrôle d'intégrité 48, établi sur l'identifiant 42, l'indicateur de rafraichissement 44, et le paquet de données 46, à chaque élaboration de données fonctionnelles, et un module 74 de mise en forme pour le transfert de données via la liaison de transfert 18.

Le module d'élaboration de données 70 est propre à engendrer des données fonctionnelles telles que définies plus haut, ou à récupérer des données fonctionnelles applicatives d'autres systèmes avion, via une couche applicative. Les données fonctionnelles sont élaborées à des instants successifs, sur requête ou à une fréquence d'élaboration de données fonctionnelles prédéfinie.

Les données fonctionnelles sont distinctes des données de transport (par exemple identifiant de mot) nécessaires pour mettre en œuvre la liaison de transfert 18.

Le module d'élaboration de données 70 est ainsi propre à créer un paquet de données fonctionnelles 46 à chaque élaboration de données, de taille généralement identique pour chaque élaboration de données. Il est propre à associer à chaque paquet de données fonctionnelles 46 élaboré, un identifiant 42, permettant d'identifier le contenu fonctionnel du paquet de données fonctionnelles 46, son producteur, et l'appartenance du paquet de données fonctionnelles 46 à une capsule 40, à l'aide d'une table de correspondance.

Comme indiqué plus haut, l'identifiant 42 définit en outre avantageusement la taille de la capsule 40, la taille du paquet de données 46 et la position de la somme de contrôle d'intégrité 48, à l'aide de la table de correspondance.

Le module d'élaboration de données 70 est en outre propre à associer, à chaque élaboration fonctionnelle de données, indépendamment de la fréquence de transmission via le lien 18, un indicateur de rafraichissement 44. L'indicateur de rafraichissement 44 garantit que les données transmises via le lien de transfert 18 sont bien des données valables ayant été rafraîchies. L'indicateur de rafraichissement 44 est codé sur un nombre déterminé de bits par exemple compris entre 8 et 32.

Dans le cas d'un compteur incrémenté, l'indicateur de rafraichissement 44 est propre à se remettre à zéro, lorsque le maximum de l'indicateur de rafraichissement a été atteint.

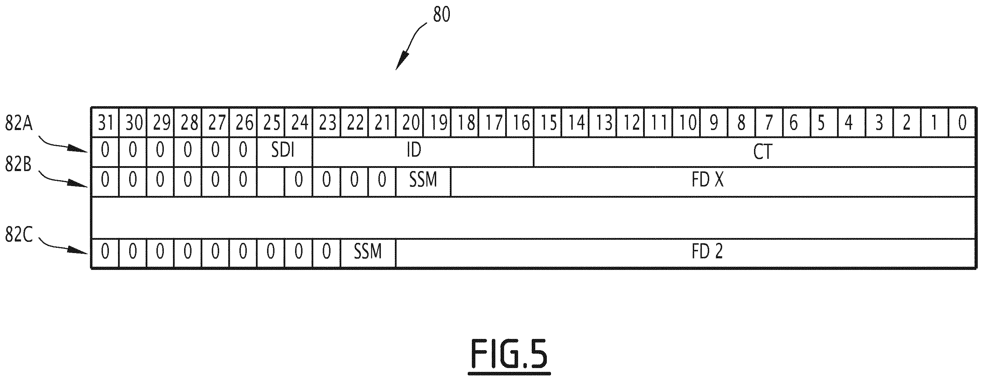

Le module de calcul d'un résultat de contrôle d'intégrité 72 est propre à élaborer une représentation mémoire 80 de l'identifiant 42, de l'indicateur de rafraichissement 44 et du paquet de données 46 au niveau de la couche applicative, indépendamment des couches de transport. Un exemple de représentation mémoire 80 est illustré sur la figure 5. Cette représentation mémoire correspond à un transport sous forme de mots 50.

En référence à la figure 5, les bits destinés au mot 50A d'identifiant ou/et d'indicateur de rafraichissement et aux mots de données 50B à 50D sur lesquels la capsule 40 est émise sont répartis sous forme de lignes, chaque ligne correspondant à un mot (mot ARINC 429 par exemple dans le cas d'une liaison ARINC 429) dans un tableau ayant un nombre de colonnes correspondant au nombre de bits de chaque mot.

Les bits spécifiques au protocole de transmission dans chaque mot 50A à 50D sont volontairement forcés dans la représentation mémoire 80 à un bit choisi, par exemple à un bit nul.

Par exemple, sur la première ligne 82A du tableau de la représentation mémoire 80 correspondant au mot 50A d'identifiant ou/et d'indicateur de rafraichissement, seuls les bits de l'identifiant 42 et de l'indicateur de rafraichissement 44 sont conservés à leur valeur. Il en est de même pour chaque mot 50B à 50D de transport de données fonctionnelles, correspondant aux lignes 82B à 82D, dans lesquelles les bits correspondant à l'identifiant du mot, au champ SDI, et au calcul de parité, sont forcés volontairement à un bit choisi, ici un bit nul.

Seules les données fonctionnelles 46, l'identifiant 42 et l'indicateur de rafraichissement 44 sont conservés dans la représentation mémoire 80.

Ainsi, la représentation mémoire 80 permet de tester l'intégrité de l'identifiant 42, et de l'indicateur de rafraichissement 44, grâce à la première ligne 82A de la représentation, et également l'intégrité du paquet de données fonctionnelles 46 réparties sur les lignes 82B à 82D, en intégrant les champs 58 de validité des données.

Une fois cette représentation mémoire 80 construite, le module de calcul de résultat d'intégrité 72 est apte à mettre en œuvre un calcul de somme de contrôle, ou/et de code de redondance cyclique tels que défini plus haut.

Par exemple, pour assurer une bonne fiabilité de la vérification d'intégrité, le résultat de calcul d'intégrité 48 est obtenu par une somme de contrôle MIL-STD-1760. Le résultat de contrôle est codé dans cet exemple sur trente-deux bits.

Le module de mise en forme 74 est alors propre à émettre chaque capsule 40 correspondant à une élaboration de données fonctionnelles, sous forme d'une pluralité de mots 50A à 50F, comme décrit précédemment, et en accord avec le protocole de transmission de données choisi.

Dans le cas notamment d'une liaison de type ARINC 429, les identifiants des mots 50A à 50F correspondant à une capsule donnée 40 sont générés avantageusement suivant une sémantique prédéfinie, de sorte que si les mots 50A à 50F sont émis dans le désordre, ou que d'autres mots 50G n'appartenant pas à la capsule 40 sont intercalés entre les mots 50A à 50F de la capsule 40 de manière discontinue, la capsule 40 peut être reconstituée par le système consommateur de données 16 en se fondant sur la sémantique prédéfinie.

Le système consommateur de données 16 comporte un module 90 de réception et de traitement de chaque capsule 40, un module de vérification d'intégrité 92 de la capsule 40 et un module 94 de vérification de validité des données de la capsule 40.

Le module de réception de capsules 90 est propre à reconstituer chaque capsule 40, notamment en identifiant les différents mots 50A à 50F de la capsule 40 reçus via le lien de transfert 18 via leur champ d'identification 52.

Une fois la capsule 40 reconstituée, il est propre à extraire l'identifiant 42, l'indicateur de rafraichissement 44 et le paquet de données 46 correspondant à la capsule 40.

Le module de réception de capsules 90 est propre à effectuer un contrôle d'authentification du système producteur de données 14 en vérifiant, à partir de l'identifiant 42, si les données reçues proviennent bien du système producteur de données 14 attendu.

Également à partir de l'identifiant 42 de capsule 40, et dans le cas d'une capsule 40 de taille fixe, le module de réception de capsules 90 est apte, à l'aide de la même table de correspondance que celle du système producteur de données 14, de connaître la taille de la capsule 40, la position de l'indicateur de rafraichissement 44, du paquet de données fonctionnelles 46 et de la somme de contrôle d'intégrité 48 au sein de la capsule 40.

Le module de vérification d'intégrité 92 est propre à reconstituer la même représentation mémoire 80 que celle élaborée par le système producteur de données 14, à partir des données récupérées de la capsule 40 qui ont été transférées par le lien de transfert 18.

Il est propre à appliquer le même algorithme que celui mis en œuvre par le module de calcul de résultats d'intégrité 72 du système producteur de données 14 pour calculer un nouveau résultat de contrôle d'intégrité portant sur les données reçues, incluant l'identifiant 42 de capsule 40, l'indicateur de rafraichissement 44 et le paquet de données fonctionnelles 46.

Le module de vérification d'intégrité 92 est propre à déterminer que la capsule 40 comprenant l'identifiant 42, l'indicateur de rafraichissement 44 et le paquet de données 46 est dans un état intègre, si le nouveau résultat de contrôle d'intégrité qu'il a calculé à partir des données reçues est identique au résultat de contrôle d'intégrité 48 calculé par le système producteur de données 14, extrait de la capsule 40.

Il est propre à déterminer que la capsule 40 incluant l'identifiant 42, l'indicateur de rafraichissement 44 et le paquet de données 46 est dans un état corrompu, si le nouveau résultat de contrôle d'intégrité qu'il a calculé à partir des données reçues est différent du résultat de contrôle d'intégrité 48 calculé par le système producteur de données 14

Une fois l'intégrité de l'indicateur de rafraichissement 44 confirmée, le module de vérification de validité 94 est propre à évaluer le rafraichissement des données contenues dans la capsule 40 en effectuant un contrôle de rafraichissement sur la base de l'indicateur de rafraichissement 44.

À cet effet, il est propre à comparer l'indicateur de rafraichissement 44 de chaque capsule 40 reçue au compteur 44 reçu d'une capsule 40 précédente pour vérifier que l'indicateur de rafraichissement 44 s'est rafraichi, par exemple en s'étant incrémenté, ou décrémenté, ou en ayant suivi une évolution attendue de rafraichissement.

Le module de vérification de validité 94 est propre par exemple à calculer l'incrément de rafraichissement entre l'indicateur de rafraichissement 44 de la capsule 40 reçue, et l'indicateur de rafraichissement 44 de la capsule 40 reçue juste avant.

Dans le cas notamment d'un compteur ou d'un décompteur, si l'incrément est unitaire en valeur absolue, le module de vérification de validité 94 est propre à déterminer que les données fonctionnelles présentes dans la capsule 40 sont bien des données rafraîchies et à placer la capsule 40 dans un état de rafraichissement attendu.

Dans le cas d'une fréquence de transmission via le lien 18 ou d'acquisition des données par le système consommateur de données 16 plus élevée que la fréquence d'élaboration des données fonctionnelles par le système producteur de données 14, le module de vérification de validité 94 est propre à autoriser un incrément de rafraichissement nul sur un nombre de capsules 40 déterminé, calculé par exemple en fonction des fréquences d'élaboration, de transmission ou d'acquisition des capsules 40.

Au-delà du nombre de capsules 40 déterminé, si l'indicateur de rafraichissement 44 reste identique, il est apte à passer la capsule 40 dans un état de rafraichissement inadéquat, car ses données n'ont pas été rafraichies.

Par ailleurs, lorsque la fréquence d'élaboration ou/et de transmission des capsules 40 est supérieure à la fréquence d'acquisition des capsules 40, le module de vérification de validité 94 est propre à autoriser un incrément de rafraichissement soit supérieur à un.

Dans tous les cas, le module de vérification de validité 94 est propre à mémoriser l'indicateur de rafraichissement de chaque capsule 40 venant d'être reçue, pour permettre un calcul d'incrément lors de la réception de la capsule 40 suivante.

Il est également propre à tenir compte de la mise à zéro de l'indicateur de rafraichissement 44, lorsque celui-ci atteint sa valeur maximale.

Ainsi, en fonction de l'incrément calculé entre les compteurs 44 de deux capsules 40 successives, le module de vérification de validité 94 est propre à déterminer si les données fonctionnelles présentes dans la capsule 40 sont bien des données rafraîchies pouvant être utilisées par le système consommateur 16, et à passer la capsule 40 dans un état de rafraîchissement attendu. Si au contraire, les données ne sont pas rafraichies ou s'il manque des données intermédiaires non reçues, il est propre à passer la capsule 40 dans un état de rafraichissement inadéquat.

Lorsque la capsule 40 provient du système producteur de données 14 attendu, qu'elle est dans l'état intègre et qu'elle est dans l'état de rafraîchissement attendu, les données fonctionnelles qu'elle contient sont considérées valides et sont alors propres à être utilisées par le système consommateur 16, ou à être transmises à un autre système avion pour être utilisées.

Lorsqu'une capsule 40 ne provient pas du système producteur de données 14 attendu, ou qu'elle est dans l'état corrompu ou encore dans un état de rafraîchissement inadéquat, le module de vérification de validité 94 est propre à exclure les données provenant de la capsule 40, qui sont considérées invalides.

Le module de vérification de validité 94 est avantageusement propre à mettre en œuvre une phase de réarmement, pendant une durée de réarmement donnée correspondant par exemple à la réinitialisation d'un calculateur ou à l'arrêt d'une panne transitoire.

Dans ce cas, dès qu'une nouvelle capsule 40 est reçue, en provenant du système producteur de données 14 attendu et en étant dans l'état intègre, le module de vérification de validité 94 est propre à mémoriser la nouvelle valeur de l'indicateur de rafraichissement 44 de cette capsule 40. Ensuite, il est propre à récupérer l'indicateur de rafraichissement 40 de chaque nouvelle capsule 40 arrivant, pour déterminer un incrément de rafraichissement. Si l'incrément de rafraichissement traduit un état de rafraichissement attendu, le module de vérification de validité 94 est propre, après la durée prédéfinie de réarmement, à passer à nouveau les capsules 40 dans l'état valide.

Dans certains cas, si la panne d'intégrité ou de rafraîchissement affectant les données contenues dans les capsules 40 est battante, c'est-à-dire qu'elle se produit régulièrement ou de manière arbitraire, le module de vérification de validité 94 est propre à stopper de manière définitive le réarmement et à déclarer le système de transfert de données 10 en défaut.

Grâce à l'invention qui vient d'être décrite, il est donc possible d'encapsuler des données fonctionnelles en les sécurisant au niveau applicatif, lors de chaque élaboration de données et non au niveau de la transmission de données, en intégrant dans chaque capsule 40 un identifiant 42, un indicateur de rafraichissement 44, et un résultat de contrôle d'intégrité 48 qui tient compte de l'identifiant 42, de l'indicateur de rafraichissement 44, et des données fonctionnelles sans tenir compte des couches de transmission.

Les données fonctionnelles ainsi encapsulées sont donc très sécurisées, indépendamment du ou des protocoles de transmission utilisés. Ceci empêche que la perte ou l'erroné de ces données ne produise des conséquences critiques.

De telles capsules 40 peuvent être transférées via un lien de transfert de données 18 qui utilise des mots 50, sans affecter la syntaxe des mots 50, et en répartissant le contenu de la capsule 40 sur différents mots 50A à 50F.

La mise à jour de l'indicateur de rafraichissement 44 à chaque élaboration de données fonctionnelles assure qu'un rafraîchissement des données s'est produit, et non simplement qu'une nouvelle transmission de données s'est produite.

Il est ainsi possible de transmettre de manière très sûre, des données numériques d'aéronef, sans risque de perte ou d'erroné des données.

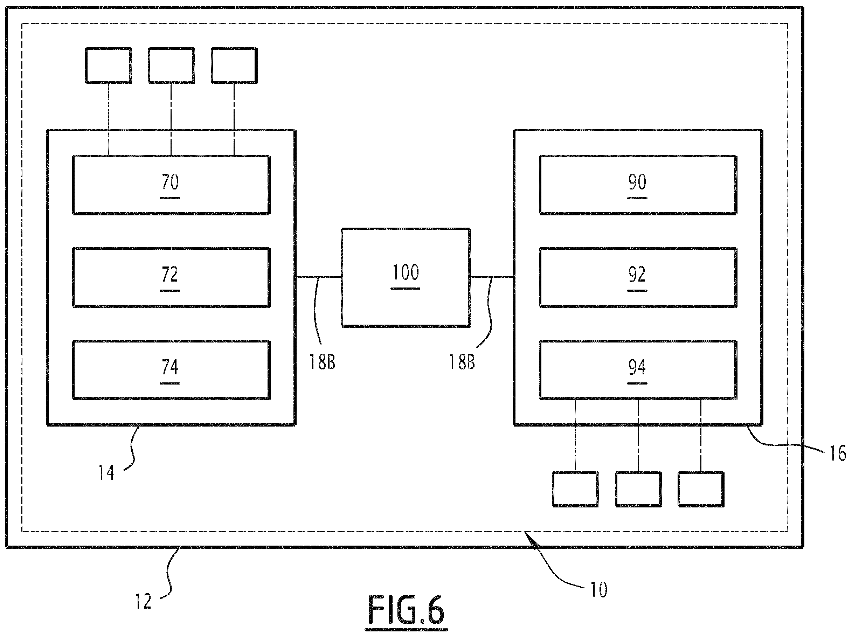

Dans la variante illustrée par la figure 6, les capsules 40 contenant les données transitent par un système intermédiaire 100 entre le système producteur de données 14 et le système consommateur 16.

Un premier lien de transfert de données 18A s'étend entre le système producteur 14 et le système intermédiaire 100, et un deuxième lien 18B de transfert de données s'étend entre le système intermédiaire 100 et le système consommateur 16.

Eventuellement, les capsules 40 sont transférées suivant un premier protocole de transfert à travers le premier lien 18A, et selon un deuxième protocole de transfert, à travers le deuxième lien 18B.

Cependant, quel que soit le protocole de transfert utilisé sur les liens 18A, 18B respectifs, l'identifiant 42, l'indicateur de rafraichissement 44, le paquet de données fonctionnelles 46 et le résultat d'intégrité 48 restent transmis depuis le système producteur 14 jusqu'au système consommateur 16, permettant d'assurer le contrôle de l'intégrité et du rafraîchissement des données par le système consommateur 16.

Dans une variante, non représentée, la capsule 40 est transmise à travers un protocole de transmission utilisant des messages constitués de plusieurs mots 50 consécutifs, généralement émis sous forme atomique, les uns à la suite des autres.

Généralement, au moins un mot 50 de chaque message contient juste des informations de gestion du protocole de transmission. La capsule 40 est alors répartie sur plusieurs mots 50 du même message ne contenant pas d'informations de gestion du protocole de transmission, contrairement au protocole décrit plus haut dans lequel chaque mot 50 contient des d'informations de gestion du protocole de transmission.

Un ou plusieurs mots du même message contiennent alors l'identifiant de capsule 42 et l'indicateur de rafraîchissement 44, un ou plusieurs mots du même message contiennent les données fonctionnelles 46 et un ou plusieurs mots du même message contiennent le résultat 48 de contrôle d'intégrité, calculé à partir de l'identifiant 42, de l'indicateur de rafraichissement 44 et du paquet de données 46 de la capsule 40.

Dans encore une autre variante (non représentée), chaque capsule 40 est répartie sur une pluralité de messages en répartissant l'identifiant de capsule 42, l'indicateur de rafraîchissement 44, les données fonctionnelles 46 et le résultat 48 de contrôle d'intégrité sur des mots de la pluralité de messages.

Dans une autre variante (non représentée), la capsule 40 est dépourvue de données fonctionnelles 46. La capsule 40 en tant que telle comprenant alors l'identifiant de capsule 42, l'indicateur de rafraîchissement 44, et le résultat 48 de contrôle d'intégrité portant sur l'identifiant 42 et sur l'indicateur de rafraîchissement 44 est alors l'équivalent d'un signal pour déclencher ou valider une action. La donnée transmise par la capsule 40 est alors la présence ou non de la capsule 40.

## Revendications

1. Système (10) de transfert de données d'aéronef (12) comportant :
- un système (14) producteur de données, propre à élaborer, à des instants successifs, des données ;
- au moins un système (16) consommateur de données, propre à recevoir et à utiliser les données produites par le système producteur de données (14) ;
l'un au moins du système producteur de données (14) et du ou de chaque système consommateur de données (16) étant embarqué au sein d'un aéronef (12) ;
- un lien (18) de transfert de données entre le système producteur de données (14) et le ou chaque système consommateur de données (16) ;
dans lequel le système producteur de données (14) est propre à engendrer, à chaque élaboration de données, une capsule de données (40), chaque capsule de données (40) comprenant un identifiant (42) du producteur de données, un indicateur de rafraichissement (44) mis à jour à chaque élaboration de données, éventuellement un paquet de données fonctionnelles (46), et un résultat (48) de contrôle d'intégrité des données portant sur au moins l'identifiant (42) l'indicateur de rafraichissement (44) et éventuellement le paquet de données fonctionnelles (46) ;
chaque capsule de données (40) étant propre à être transférée au ou à chaque système consommateur de données (16) via le lien de transfert (18) ;
le ou chaque système consommateur de données (16) étant propre à récupérer chaque capsule de données (40) pour extraire l'identifiant (42), l'indicateur de rafraichissement (44), éventuellement le paquet de données fonctionnelles (46), et le résultat de contrôle d'intégrité (48), et à contrôler l'intégrité des données de la capsule de données (40) en établissant un nouveau résultat de contrôle d'intégrité à partir d'au moins l'identifiant (42) l'indicateur de rafraichissement (44) et éventuellement le paquet de données fonctionnelles (46) récupéré dans la capsule de données (40) et en comparant le nouveau résultat de contrôle d'intégrité au résultat de contrôle d'intégrité (48) récupéré dans la capsule de données (40), la capsule de données (40) étant dans un état intègre lorsque le nouveau résultat de contrôle d'intégrité correspond au résultat de contrôle d'intégrité (48) récupéré dans la capsule de données (40),
et dans lequel la liaison de transfert (18) met en œuvre un protocole de transfert générant des mots (50), chaque capsule de données (40) étant émise à l'aide d'une pluralité de mots (50A à 50F),
dans lequel la pluralité de mots (50A à 50F) comporte :
- au moins un mot (50A) d'identification comprenant l'identifiant (42) et/ou l'indicateur de rafraichissement (44) ;
- au moins un mot (50E, 50F) de vérification d'intégrité, contenant le résultat de contrôle d'intégrité (48), dans lequel la pluralité de mots (50A à 50F) comprend au moins deux mots distincts (50E, 50F) de vérification d'intégrité, chaque mot de vérification d'intégrité (50E, 50F) contenant une partie du résultat de contrôle d'intégrité (48).

2. Système de transfert (10) selon la revendication 1, dans lequel chaque capsule de données (40) comprend un paquet de données fonctionnelles (46), le résultat (48) de contrôle d'intégrité des données de la capsule portant sur au moins l'identifiant (42), l'indicateur de rafraichissement (44) et le paquet de données fonctionnelles (46), le ou chaque système consommateur de données (16) étant propre à extraire le paquet de données fonctionnelles (46) et à contrôler l'intégrité des données de la capsule de données (40) en établissant un nouveau résultat de contrôle d'intégrité à partir d'au moins l'identifiant (42), l'indicateur de rafraichissement (44) et le paquet de données fonctionnelles (46).

3. Système de transfert (10) selon la revendication 1 ou 2, dans laquelle le ou chaque système consommateur de données (16) est propre à comparer l'identifiant (42) reçu dans chaque capsule de données (40) à un identifiant prédéfini sur la base d'une sémantique ou d'une table de correspondance pour en déduire au moins une caractéristique de contenu de la capsule de données (40).

4. Système de transfert selon la revendication 3, dans laquelle le système producteur de données (14) émet des capsules de données (40) de taille fixe, le ou chaque système consommateur de données (16) étant propre à déterminer la taille de la capsule de données (40), la taille et/ou la position de l'identifiant (42), de l'indicateur de rafraichissement (44), éventuellement du paquet de données fonctionnelles (46) ou/et du résultat de contrôle d'intégrité (48) dans la capsule de données (40), à partir d'une sémantique ou d'une table de correspondance reliant l'identifiant prédéfini, à la taille de la capsule de données (40), à la taille et/ou la position de l'identifiant (42), de l'indicateur de rafraichissement (44), éventuellement du paquet de données fonctionnelles (46) ou/et du résultat de contrôle d'intégrité (48) dans la capsule de données (40).

5. Système de transfert (10) selon l'une quelconque des revendications précédentes, dans lequel le ou chaque système consommateur de données (16) est propre, pour chaque capsule de données (40) reçue, à déterminer un incrément de rafraichissement à partir de l'indicateur de rafraichissement (44) de la capsule de données (40) et à partir de l'indicateur de rafraichissement (44) d'une capsule de données (40) précédemment reçue, le ou chaque système consommateur de données (16) étant propre à déterminer un état de rafraichissement de la capsule de données (40) entre un état de rafraichissement attendu et un état de rafraichissement inadéquat en fonction de l'incrément de rafraichissement, et en fonction de la fréquence d'élaboration des capsules, de la fréquence de transfert des capsules, ou/et de la fréquence de réception des capsules.

6. Système de transfert (10) selon la revendication 5, dans lequel le ou chaque système consommateur de données (16) est propre à vérifier, à partir de l'identifiant de capsule (42), que le système producteur de données (14) ayant émis la capsule de données (40) est un système producteur de données attendu pour émettre la capsule de données (40), le ou chaque système consommateur de données (16) étant propre à passer la capsule de données (40) dans un état valide permettant l'utilisation des données qu'elle contient lorsque la capsule de données (40) provient du système producteur de données (14) attendu, qu'elle est dans l'état intègre et qu'elle est dans l'état de rafraîchissement attendu.

7. Système de transfert (10) selon la revendication 5 ou 6, dans lequel le ou chaque système consommateur de données (16) est propre à passer dans l'état invalide une capsule de données (40) qui ne provient pas du système producteur de données (14) attendu, qui n'est pas dans l'état intègre ou qui n'est pas dans l'état de rafraîchissement attendu et à maintenir dans l'état invalide des capsules de données (40) qui suivent une capsule de donnée (40) placée dans l'état invalide, le ou chaque système consommateur de données (16) étant propre à repasser dans l'état valide au moins une capsule de données (40) suivant une pluralité de capsules maintenues dans l'état invalide lorsque les capsules de données (40) maintenues dans l'état invalide proviennent du système producteur de données (14) attendu, qu'elles sont dans l'état intègre et qu'elles sont dans l'état de rafraîchissement attendu pendant une période de réarmement prédéfinie.

8. Système de transfert (10) selon l'une quelconque des revendications précédentes, dans lequel la pluralité de mots (50A à 50F) comporte au moins un mot (50B à 50D) de données fonctionnelles contenant des données fonctionnelles du paquet de données fonctionnelles (46).

9. Système de transfert (10) selon l'une quelconque des revendications précédentes, dans lequel le système producteur de données (14) est propre à élaborer le résultat de contrôle d'intégrité (48) en adoptant une représentation mémoire (80) à partir des données à répartir dans les mots (50A à 50F) destinés à transférer la capsule de données (40), le ou chaque système consommateur de données (16) étant propre à reconstituer la représentation mémoire (80) élaborée par le système producteur de données (14) à partir des données récupérées des mots (50A à 50F) de la capsule de données (40), et dans lequel optionnellement, chaque mot (50A à 50F) comporte des champs (52, 54, 60) caractéristiques du protocole de transfert, au moins une partie des données dans les champs (52, 54, 60) caractéristiques du protocole de transfert étant substituées ou supprimées dans la représentation mémoire (80).

10. Système producteur de données (14), destiné à un système de transfert de données (10) d'aéronef (12), le système producteur de données (14) étant propre à élaborer, à des instants successifs, des données ;
dans lequel le système producteur de données (14) est propre à engendrer, à chaque élaboration de données, une capsule de données (40), chaque capsule de données (40) comprenant un identifiant (42) du producteur de données, un indicateur de rafraichissement (44) mis à jour à chaque élaboration de données, éventuellement un paquet de données fonctionnelles (46), et un résultat (48) de contrôle d'intégrité des données portant sur l'identifiant (42), l'indicateur de rafraichissement (44) et éventuellement le paquet de données fonctionnelles (46) ;
chaque capsule de données (40) étant propre à être transférée à un système consommateur de données (16) via un lien de transfert (18),
dans lequel la liaison de transfert (18) met en œuvre un protocole de transfert générant des mots (50), chaque capsule de données (40) étant émise à l'aide d'une pluralité de mots (50A à 50F),
dans lequel la pluralité de mots (50A à 50F) comporte :
- au moins un mot (50A) d'identification comprenant l'identifiant (42) et/ou l'indicateur de rafraichissement (44) ;
- au moins un mot (50E, 50F) de vérification d'intégrité, contenant le résultat de contrôle d'intégrité (48), dans lequel la pluralité de mots (50A à 50F) comprend au moins deux mots distincts (50E, 50F) de vérification d'intégrité, chaque mot de vérification d'intégrité (50E, 50F) contenant une partie du résultat de contrôle d'intégrité (48).

11. Système consommateur de données (16), destiné à être utilisé dans un système de transfert de données (10) d'aéronef (12), le ou chaque système consommateur de données (16) étant propre à recevoir des capsules de données (40), chaque capsule de données comprenant un identifiant (42) du producteur de données, un indicateur de rafraichissement (44) mis à jour à chaque élaboration de données, éventuellement un paquet de données fonctionnelles (46), et un résultat de contrôle d'intégrité des données portant sur au moins l'identifiant (42), l'indicateur de rafraichissement (44) et éventuellement le paquet de données (46) ;
chaque capsule de données (40) étant propre à être transférée au système consommateur de données (16) via le lien de transfert (18) ;
le ou chaque système consommateur de données (16) étant propre à récupérer chaque capsule de données (40) pour extraire l'identifiant (42), l'indicateur de rafraichissement (44), éventuellement le paquet de données fonctionnelles (46), et le résultat de contrôle d'intégrité (48), et à contrôler l'intégrité des données de la capsule de données (40) en établissant un nouveau résultat de contrôle d'intégrité à partir d'au moins l'identifiant (42), l'indicateur de rafraichissement (44) et éventuellement le paquet de données fonctionnelles (46) récupéré dans la capsule de données (40) et en comparant le nouveau résultat de contrôle d'intégrité au résultat de contrôle d'intégrité (48) récupéré dans la capsule de données (40), la capsule de données (40) étant dans un état intègre lorsque le nouveau résultat de contrôle d'intégrité correspond au résultat de contrôle d'intégrité (48) récupéré dans la capsule de données (40)
dans lequel la liaison de transfert (18) met en œuvre un protocole de transfert générant des mots (50), chaque capsule de données (40) étant émise à l'aide d'une pluralité de mots (50A à 50F),
dans lequel la pluralité de mots (50A à 50F) comporte :
- au moins un mot (50A) d'identification comprenant l'identifiant (42) et/ou l'indicateur de rafraichissement (44) ;
- au moins un mot (50E, 50F) de vérification d'intégrité, contenant le résultat de contrôle d'intégrité (48), dans lequel la pluralité de mots (50A à 50F) comprend au moins deux mots distincts (50E, 50F) de vérification d'intégrité, chaque mot de vérification d'intégrité (50E, 50F) contenant une partie du résultat de contrôle d'intégrité (48).

12. Procédé de transfert de données d'aéronef (12) comprenant les étapes suivantes :
- élaboration, à des instants successifs, de données par un système producteur de données (14) ;
- transfert des données par un lien de transfert de données (18) entre le système producteur de données (14) et au moins un système consommateur de données (16) ;
- réception et, après vérification d'intégrité, utilisation par le ou chaque système consommateur de données (16), de données produites par le système producteur de données (14) ;
l'un au moins du système producteur de données (14) et du ou de chaque système consommateur de données (16) étant embarqué au sein d'un aéronef (12);
comprenant les étapes suivantes :
- génération, par le système producteur de données (14), à chaque élaboration de données, d'une capsule de données (40), chaque capsule de données (40) comprenant un identifiant (42) du producteur de données (14), un indicateur de rafraichissement (44) mis à jour à chaque élaboration de données, éventuellement un paquet de données fonctionnelles (46), et un résultat de contrôle d'intégrité des données (48) portant sur l'identifiant (42), l'indicateur de rafraichissement (44) et éventuellement le paquet de données fonctionnelles (46) ;
- transfert de chaque capsule de données (40) au système consommateur de données via le lien de transfert (18) ;
- récupération par le ou chaque système consommateur de données (16) de chaque capsule de données (40) pour extraire l'identifiant (42), l'indicateur de rafraichissement (44), éventuellement le paquet de données fonctionnelles (46), et le résultat de contrôle d'intégrité (48), et
- contrôle d'intégrité des données de la capsule de données (40), par le ou chaque système consommateur de données (16) en établissant un nouveau résultat de contrôle d'intégrité à partir d'au moins l'identifiant (42), l'indicateur de rafraichissement (44) et éventuellement le paquet de données fonctionnelles (46) récupéré dans la capsule de données (40) et en comparant le nouveau résultat de contrôle d'intégrité au résultat de contrôle d'intégrité (48) récupéré dans la capsule de données (40) ;
- attribution à la capsule de données (40) d'un état intègre lorsque le nouveau résultat de contrôle d'intégrité correspond au résultat de contrôle d'intégrité (48) récupéré dans la capsule de données (40),
dans lequel la liaison de transfert (18) met en œuvre un protocole de transfert générant des mots (50), chaque capsule de données (40) étant émise à l'aide d'une pluralité de mots (50A à 50F),
dans lequel la pluralité de mots (50A à 50F) comporte :
- au moins un mot (50A) d'identification comprenant l'identifiant (42) et/ou l'indicateur de rafraichissement (44) ;
- au moins un mot (50E, 50F) de vérification d'intégrité, contenant le résultat de contrôle d'intégrité (48), dans lequel la pluralité de mots (50A à 50F) comprend au moins deux mots distincts (50E, 50F) de vérification d'intégrité, chaque mot de vérification d'intégrité (50E, 50F) contenant une partie du résultat de contrôle d'intégrité (48).

13. Procédé selon la revendication 12, comprenant la détermination par le ou chaque système consommateur de données (16), pour chaque capsule de données (40) reçue, d'un incrément de rafraichissement à partir de l'indicateur de rafraichissement (44) de la capsule de données (40) et à partir de l'indicateur de rafraichissement (44) d'une capsule de données (40) précédemment reçue, et la détermination par le ou chaque système consommateur de données (16) d'un état de rafraichissement de la capsule de données (40) entre un état de rafraichissement attendu et un état de rafraichissement inadéquat en fonction de l'incrément de rafraichissement, et en fonction de la fréquence d'élaboration des capsules, de la fréquence de transfert des capsules, ou/et de la fréquence de réception des capsules.

14. Procédé selon la revendication 13, comprenant la vérification par le ou chaque système consommateur de données (16), à partir de l'identifiant de capsule (42), que le système producteur de données (14) ayant émis la capsule de données (40) est un système producteur de données attendu pour émettre la capsule de données (40) et le passage de la capsule de données (40) dans un état valide permettant l'utilisation des données qu'elle contient lorsque la capsule de données (40) provient du système producteur de données (14) attendu, qu'elle est dans l'état intègre et qu'elle est dans l'état de rafraîchissement attendu.

## Patentansprüche

1. System (10) zur Übertragung von Daten eines Luftfahrzeugs (12), umfassend:
- ein Datenproduzentensystem (14), geeignet, zu aufeinanderfolgenden Zeitpunkten Daten zu erstellen;
- mindestens ein Datenkonsumentensystem (16), geeignet, die durch das Datenproduzentensystem (14) produzierten Daten zu empfangen und zu verwenden;
wobei mindestens eines von dem Datenproduzentensystem (14) und dem oder jedem Datenkonsumentensystem (16) innerhalb eines Luftfahrzeugs (12) an Bord ist;
- eine Verbindung (18) zur Datenübertragung zwischen dem Datenproduzentensystem (14) und dem oder jedem Datenkonsumentensystem (16);
in dem das Datenproduzentensystem (14) dazu geeignet ist, bei jeder Erstellung von Daten eine Datenkapsel (40) zu erzeugen, wobei jede Datenkapsel (40) eine Kennung (42) des Datenproduzenten, einen bei jeder Erstellung von Daten aktualisierten Auffrischungsindikator (44), gegebenenfalls ein Funktionsdatenpaket (46), und ein Ergebnis (48) der Integritätsprüfung der Daten umfasst, das sich auf mindestens die Kennung (42) den Auffrischungsindikator (44) und gegebenenfalls das Funktionsdatenpaket (46) bezieht;
wobei jede Datenkapsel (40) dazu geeignet ist, an das oder jedes Datenkonsumentensystem (16) über die Übertragungsverbindung (18) übertragen zu werden;
wobei das oder jedes Datenkonsumentensystem (16) dazu geeignet ist, jede Datenkapsel (40) abzurufen, um die Kennung (42), den Auffrischungsindikator (44), gegebenenfalls das Funktionsdatenpaket (46), und das Prüfergebnis der Integritätsprüfung (48) zu extrahieren, und die Integrität der Daten der Datenkapsel (40) zu prüfen, indem ein neues Prüfergebnis der Integritätsprüfung ausgehend von mindestens der Kennung (42) dem Auffrischungsindikator (44) und gegebenenfalls dem in der Datenkapsel (40) abgerufenen Funktionsdatenpaket (46) erstellt wird und indem das neue Prüfergebnis der Integritätsprüfung mit dem in der Datenkapsel (40) abgerufenen Prüfergebnis der Integritätsprüfung (48) verglichen wird, wobei die Datenkapsel (40) in einem integren Zustand ist, wenn das neue Prüfergebnis der Integritätsprüfung dem in der Datenkapsel (40) abgerufenen Prüfergebnis der Integritätsprüfung (48) entspricht,
und in dem die Übertragungsverbindung (18) ein Übertragungsprotokoll einsetzt, das Wörter (50) erzeugt, wobei jede Datenkapsel (40) mithilfe einer Vielzahl von Wörtern (50A bis 50F) gesendet wird,
in dem die Vielzahl von Wörtern (50A bis 50F) umfasst:
- mindestens ein Identifizierungswort (50A), das die Kennung (42) und/oder den Auffrischungsindikator (44) umfasst;
- mindestens ein Integritätsverifizierungswort (50E, 50F), das das Prüfergebnis der Integritätsprüfung (48) enthält, in dem die Vielzahl von Wörtern (50A bis 50F) mindestens zwei getrennte Integritätsverifizierungswörter (50E, 50F) umfasst, wobei jedes Integritätsverifizierungswort (50E, 50F) einen Teil des Prüfergebnisses der Integritätsprüfung (48) enthält.

2. Übertragungssystem (10) nach Anspruch 1, in dem jede Datenkapsel (40) ein Funktionsdatenpaket (46) umfasst, wobei sich das Ergebnis (48) der Integritätsprüfung der Daten der Kapsel auf mindestens die Kennung (42), den Auffrischungsindikator (44) und das Funktionsdatenpaket (46) bezieht, wobei das oder jedes Datenkonsumentensystem (16) dazu geeignet ist, das Funktionsdatenpaket (46) zu extrahieren und die Integrität der Daten der Datenkapsel (40) zu prüfen, indem ein neues Prüfergebnis der Integritätsprüfung ausgehend von mindestens der Kennung (42), dem Auffrischungsindikator (44) und dem Funktionsdatenpaket (46) erstellt wird.

3. Übertragungssystem (10) nach Anspruch 1 oder 2, in welcher das oder jedes Datenkonsumentensystem (16) dazu geeignet ist, die in jeder Datenkapsel (40) empfangene Kennung (42) mit einer auf der Basis einer Semantik oder einer Entsprechungstabelle vordefinierten Kennung zu vergleichen, um daraus mindestens ein Inhaltsmerkmal der Datenkapsel (40) abzuleiten.

4. Übertragungssystem nach Anspruch 3, in welcher das Datenproduzentensystem (14) Datenkapseln (40) fester Größe sendet, wobei das oder jedes Datenkonsumentensystem (16) dazu geeignet ist, die Größe der Datenkapsel (40), die Größe und/oder die Position der Kennung (42), des Auffrischungsindikators (44), gegebenenfalls des Funktionsdatenpakets (46) oder/und des Prüfergebnisses der Integritätsprüfung (48) in der Datenkapsel (40), ausgehend von einer Semantik oder einer Entsprechungstabelle zu bestimmen, welche die vordefinierte Kennung mit der Größe der Datenkapsel (40), mit der Größe und/oder der Position der Kennung (42), des Auffrischungsindikators (44), gegebenenfalls des Funktionsdatenpakets (46) oder/und des Prüfergebnisses der Integritätsprüfung (48) in der Datenkapsel (40) verbindet.

5. Übertragungssystem (10) nach einem beliebigen der vorhergehenden Ansprüche, in dem das oder jedes Datenkonsumentensystem (16) dazu geeignet ist, für jede empfangene Datenkapsel (40) ein Auffrischungsinkrement ausgehend von dem Auffrischungsindikator (44) der Datenkapsel (40) und ausgehend von dem Auffrischungsindikator (44) einer zuvor empfangenen Datenkapsel (40) zu bestimmen, wobei das oder jedes Datenkonsumentensystem (16) dazu geeignet ist, einen Auffrischungszustand der Datenkapsel (40) zwischen einem erwarteten Auffrischungszustand und einem ungeeigneten Auffrischungszustand in Abhängigkeit von dem Auffrischungsinkrement, und in Abhängigkeit von der Erstellungshäufigkeit der Kapseln, der Übertragungshäufigkeit der Kapseln, oder/und der Empfangshäufigkeit der Kapseln zu bestimmen.

6. Übertragungssystem (10) nach Anspruch 5, in dem das oder jedes Datenkonsumentensystem (16) dazu geeignet ist, ausgehend von der Kapselkennung (42) zu überprüfen, dass das Datenproduzentensystem (14), das die Datenkapsel (40) gesendet hat, ein Datenproduzentensystem ist, das erwartet wird, um die Datenkapsel (40) zu senden, wobei das oder jedes Datenkonsumentensystem (16) dazu geeignet ist, die Datenkapsel (40) in einen gültigen Zustand übergehen zu lassen, der die Verwendung der Daten ermöglicht, die sie enthält, wenn die Datenkapsel (40) von dem erwarteten Datenproduzentensystem (14) stammt, sie in dem integren Zustand ist und sie in dem erwarteten Auffrischungszustand ist.

7. Übertragungssystem (10) nach Anspruch 5 oder 6, in dem das oder jedes Datenkonsumentensystem (16) dazu geeignet ist, eine Datenkapsel (40), die nicht von dem erwarteten Datenproduzentensystem (14) stammt, die nicht in dem integren Zustand ist oder die nicht in dem erwarteten Auffrischungszustand ist, in den ungültigen Zustand übergehen zu lassen und Datenkapseln (40), die einer in den ungültigen Zustand versetzten Datenkapsel (40) folgen, in dem ungültigen Zustand zu halten, wobei das oder jedes Datenkonsumentensystem (16) dazu geeignet ist, mindestens eine Datenkapsel (40), die einer Vielzahl von in dem ungültigen Zustand gehaltenen Kapseln folgt, wieder in den gültigen Zustand übergehen zu lassen, wenn die in dem ungültigen Zustand gehaltenen Datenkapseln (40) von dem erwarteten Datenproduzentensystem (14) stammen, sie in dem integren Zustand sind und sie während einer vordefinierten Wiederbereitschaftsperiode in dem erwarteten Auffrischungszustand sind.

8. Übertragungssystem (10) nach einem beliebigen der vorhergehenden Ansprüche, in dem die Vielzahl von Wörtern (50A bis 50F) mindestens ein Funktionsdatenwort (50B bis 50D) umfasst, das Funktionsdaten des Funktionsdatenpakets (46) enthält.

9. Übertragungssystem (10) nach einem beliebigen der vorhergehenden Ansprüche, in dem das Datenproduzentensystem (14) dazu geeignet ist, das Prüfergebnis der Integritätsprüfung (48) zu erstellen, indem es eine Speicherdarstellung (80) ausgehend von den Daten annimmt, die in die Wörter (50A bis 50F) zu verteilen sind, welche dazu bestimmt sind, die Datenkapsel (40) zu übertragen, wobei das oder jedes Datenkonsumentensystem (16) dazu geeignet ist, die durch das Datenproduzentensystem (14) erstellte Speicherdarstellung (80) ausgehend von den aus den Wörtern (50A bis 50F) der Datenkapsel (40) abgerufenen Daten wiederherzustellen, und in dem optional jedes Wort (50A bis 50F) Felder (52, 54, 60) umfasst, die für das Übertragungsprotokoll charakteristisch sind, wobei mindestens ein Teil der Daten in den Feldern (52, 54, 60), die für das Übertragungsprotokoll charakteristisch sind, in der Speicherdarstellung (80) substituiert oder gelöscht wird.

10. Datenproduzentensystem (14), bestimmt für ein System (10) zur Datenübertragung eines Luftfahrzeugs (12), wobei das Datenproduzentensystem (14) dazu geeignet ist, zu aufeinanderfolgenden Zeitpunkten Daten zu erstellen;
in dem das Datenproduzentensystem (14) dazu geeignet ist, bei jeder Erstellung von Daten eine Datenkapsel (40) zu erzeugen, wobei jede Datenkapsel (40) eine Kennung (42) des Datenproduzenten, einen bei jeder Erstellung von Daten aktualisierten Auffrischungsindikator (44), gegebenenfalls ein Funktionsdatenpaket (46), und ein Ergebnis (48) der Integritätsprüfung der Daten umfasst, das sich auf die Kennung (42), den Auffrischungsindikator (44) und gegebenenfalls das Funktionsdatenpaket (46) bezieht;
wobei jede Datenkapsel (40) dazu geeignet ist, an ein Datenkonsumentensystem (16) über eine Übertragungsverbindung (18) übertragen zu werden,
in dem die Übertragungsverbindung (18) ein Übertragungsprotokoll einsetzt, das Wörter (50) erzeugt, wobei jede Datenkapsel (40) mithilfe einer Vielzahl von Wörtern (50A bis 50F) gesendet wird,
in dem die Vielzahl von Wörtern (50A bis 50F) umfasst:
- mindestens ein Identifizierungswort (50A), das die Kennung (42) und/oder den Auffrischungsindikator (44) umfasst;
- mindestens ein Integritätsverifizierungswort (50E, 50F), das das Prüfergebnis der Integritätsprüfung (48) enthält, in dem die Vielzahl von Wörtern (50A bis 50F) mindestens zwei getrennte Integritätsverifizierungswörter (50E, 50F) umfasst, wobei jedes Integritätsverifizierungswort (50E, 50F) einen Teil des Prüfergebnisses der Integritätsprüfung (48) enthält.

11. Datenkonsumentensystem (16), bestimmt dazu, in einem System (10) zur Datenübertragung eines Luftfahrzeugs (12) verwendet zu werden, wobei das oder jedes Datenkonsumentensystem (16) dazu geeignet ist, Datenkapseln (40) zu empfangen, wobei jede Datenkapsel eine Kennung (42) des Datenproduzenten, einen bei jeder Erstellung von Daten aktualisierten Auffrischungsindikator (44), gegebenenfalls ein Funktionsdatenpaket (46), und ein Prüfergebnis der Integritätsprüfung der Daten umfasst, das sich auf mindestens die Kennung (42), den Auffrischungsindikator (44) und gegebenenfalls das Datenpaket (46) bezieht;
wobei jede Datenkapsel (40) dazu geeignet ist, an das Datenkonsumentensystem (16) über die Übertragungsverbindung (18) übertragen zu werden;
wobei das oder jedes Datenkonsumentensystem (16) dazu geeignet ist, jede Datenkapsel (40) abzurufen, um die Kennung (42), den Auffrischungsindikator (44), gegebenenfalls das Funktionsdatenpaket (46), und das Integritätsprüfergebnis (48) zu extrahieren, und die Integrität der Daten der Datenkapsel (40) zu prüfen, indem ein neues Integritätsprüfergebnis ausgehend von mindestens der Kennung (42), dem Auffrischungsindikator (44) und gegebenenfalls dem in der Datenkapsel (40) abgerufenen Funktionsdatenpaket (46) erstellt wird und indem das neue Integritätsprüfergebnis mit dem in der Datenkapsel (40) abgerufenen Integritätsprüfergebnis (48) verglichen wird, wobei die Datenkapsel (40) in einem integren Zustand ist, wenn das neue Integritätsprüfergebnis dem in der Datenkapsel (40) abgerufenen Integritätsprüfergebnis (48) entspricht
in dem die Übertragungsverbindung (18) ein Übertragungsprotokoll umsetzt, das Wörter (50) erzeugt, wobei jede Datenkapsel (40) mithilfe einer Mehrzahl von Wörtern (50A bis 50F) gesendet wird,
in dem die Mehrzahl von Wörtern (50A bis 50F) umfasst:
- mindestens ein Identifikationswort (50A), das die Kennung (42) und/oder den Auffrischungsindikator (44) umfasst;
- mindestens ein Integritätsprüfwort (50E, 50F), das das Integritätsprüfergebnis (48) enthält, in dem die Mehrzahl von Wörtern (50A bis 50F) mindestens zwei unterschiedliche Integritätsprüfwörter (50E, 50F) umfasst, wobei jedes Integritätsprüfwort (50E, 50F) einen Teil des Integritätsprüfergebnisses (48) enthält.

12. Verfahren zur Übertragung von Daten eines Luftfahrzeugs (12), umfassend die folgenden Schritte:
- Erarbeitung, zu aufeinanderfolgenden Zeitpunkten, von Daten durch ein Datenproduzentensystem (14) ;
- Übertragung der Daten durch eine Datenübertragungsverbindung (18) zwischen dem Datenproduzentensystem (14) und mindestens einem Datenkonsumentensystem (16) ;
- Empfang und, nach Integritätsprüfung, Verwendung durch das oder jedes Datenkonsumentensystem (16), von Daten, die durch das Datenproduzentensystem (14) produziert werden ;
wobei mindestens eines von dem Datenproduzentensystem (14) und dem oder jedem Datenkonsumentensystem (16) an Bord eines Luftfahrzeugs (12) angeordnet ist;
umfassend die folgenden Schritte:
- Erzeugung, durch das Datenproduzentensystem (14), bei jeder Erarbeitung von Daten, einer Datenkapsel (40), wobei jede Datenkapsel (40) eine Kennung (42) des Datenproduzenten (14), einen bei jeder Erarbeitung von Daten aktualisierten Auffrischungsindikator (44), gegebenenfalls ein Funktionsdatenpaket (46), und ein Ergebnis der Integritätsprüfung der Daten (48) umfasst, das sich auf die Kennung (42), den Auffrischungsindikator (44) und gegebenenfalls das Funktionsdatenpaket (46) bezieht ;
- Übertragung jeder Datenkapsel (40) an das Datenkonsumentensystem über die Übertragungsverbindung (18) ;
- Abruf durch das oder jedes Datenkonsumentensystem (16) jeder Datenkapsel (40), um die Kennung (42), den Auffrischungsindikator (44), gegebenenfalls das Funktionsdatenpaket (46), und das Integritätsprüfergebnis (48) zu extrahieren, und
- Integritätsprüfung der Daten der Datenkapsel (40), durch das oder jedes Datenkonsumentensystem (16), indem ein neues Integritätsprüfergebnis ausgehend von mindestens der Kennung (42), dem Auffrischungsindikator (44) und gegebenenfalls dem in der Datenkapsel (40) abgerufenen Funktionsdatenpaket (46) erstellt wird und indem das neue Integritätsprüfergebnis mit dem in der Datenkapsel (40) abgerufenen Integritätsprüfergebnis (48) verglichen wird;
- Zuweisung eines integren Zustands zu der Datenkapsel (40), wenn das neue Integritätsprüfergebnis dem in der Datenkapsel (40) abgerufenen Integritätsprüfergebnis (48) entspricht,
in dem die Übertragungsverbindung (18) ein Übertragungsprotokoll umsetzt, das Wörter (50) erzeugt, wobei jede Datenkapsel (40) mithilfe einer Mehrzahl von Wörtern (50A bis 50F) gesendet wird,
in dem die Mehrzahl von Wörtern (50A bis 50F) umfasst:
- mindestens ein Identifikationswort (50A), das die Kennung (42) und/oder den Auffrischungsindikator (44) umfasst;
- mindestens ein Integritätsprüfwort (50E, 50F), das das Integritätsprüfergebnis (48) enthält, in dem die Mehrzahl von Wörtern (50A bis 50F) mindestens zwei unterschiedliche Integritätsprüfwörter (50E, 50F) umfasst, wobei jedes Integritätsprüfwort (50E, 50F) einen Teil des Integritätsprüfergebnisses (48) enthält.

13. Verfahren nach Anspruch 12, umfassend die Bestimmung, durch das oder jedes Datenkonsumentensystem (16), für jede empfangene Datenkapsel (40), eines Auffrischungsinkrements ausgehend von dem Auffrischungsindikator (44) der Datenkapsel (40) und ausgehend von dem Auffrischungsindikator (44) einer zuvor empfangenen Datenkapsel (40), und die Bestimmung, durch das oder jedes Datenkonsumentensystem (16), eines Auffrischungszustands der Datenkapsel (40) zwischen einem erwarteten Auffrischungszustand und einem ungeeigneten Auffrischungszustand in Abhängigkeit von dem Auffrischungsinkrement, und in Abhängigkeit von der Erarbeitungsfrequenz der Kapseln, von der Übertragungsfrequenz der Kapseln, oder/und von der Empfangsfrequenz der Kapseln.

14. Verfahren nach Anspruch 13, umfassend die Überprüfung durch das oder jedes Datenkonsumentensystem (16), ausgehend von der Kapselkennung (42), dass das Datenproduzentensystem (14), das die Datenkapsel (40) gesendet hat, ein erwartetes Datenproduzentensystem zum Senden der Datenkapsel (40) ist, und den Übergang der Datenkapsel (40) in einen gültigen Zustand, der die Verwendung der Daten, die sie enthält, ermöglicht, wenn die Datenkapsel (40) von dem erwarteten Datenproduzentensystem (14) stammt, sie in dem integren Zustand ist und sie in dem erwarteten Auffrischungszustand ist.

## Claims

1. A system (10) for transfer of aircraft data (12), comprising:
- a data producer system (14) able to produce data (46) at successive moments;
- at least one data consumer system (16), able to receive and using the data produced by the data producer system (14);
the at least one of the data producer system (14) and the or each data consumer system (16) being on board an aircraft (12);
- a data transfer link (18) between the data producer system (14) and the or each data consumer system (16);
wherein the data producer system (14) is able to generate a data capsule (40) at each data processing, each data capsule (40) comprising an identifier (42) of the data producer, a refresh indicator (44) updated at each data processing, possibly a functional data packet (46) and a result (48) of the data integrity check relating to at least the identifier (42), the refresh indicator (44) and possibly the functional data packet (46);
each data capsule (40) being able to be transferred to the or each data consumer system (16) via the transfer link (18);
the or each data consumer system (16) being able to retrieve each data capsule (40) to extract the identifier (42), the refresh indicator (44), possibly the functional data packet (46), and the integrity check result (48) and checking the data integrity in the data capsule (40) by establishing a new integrity check result from at least the identifier (42), the refresh indicator (44) and optionally the functional data packet (46) retrieved from the data capsule (40) and by comparing the new integrity check result to the integrity check result (48) retrieved from the data capsule (40), the data capsule (40) being in an integrity state when the new integrity check result matches the integrity check result (48) retrieved from the data capsule (40),
and wherein the transfer link (18) implements a word-generating transfer protocol (50), each data capsule (40) being issued using a plurality of words (50A to 50F),
wherein the plurality of words (50A to 50F) includes:
- at least one identification word (50A), comprising the identifier (42) and/or the refresh indicator (44),
- at least one integrity check word (50E, 50F), containing the integrity check result (48A), wherein the plurality of words (50A to 50F) comprises at least two separate integrity check words (50E, 50F), each integrity check word (50E, 50F) containing a part of the integrity check result (48).

2. The transfer system (10) according to claim 1, wherein each data capsule (40) comprises a functional data packet (46), the integrity check result (48) of the capsule data relating to at least the identifier (42), the refresh indicator (44) and the functional data packet (46), the or each data consumer system (16) being able to extract the functional data packet (46) and to check the data integrity of the data capsule (40) by establishing a new integrity check result from at least the identifier (42), the refresh indicator (44) and the functional data packet (46).

3. The transfer system (10) according to claim 1 or 2, wherein the or each data consumer system (16) is able to compare the identifier (42) received in each data capsule (40) to a predefined identifier on a semantic or a mapping table basis, to deduce at least one content characteristic of the data capsule (40).

4. The transfer system according to claim 3, wherein the data producer system (14) issues data capsules (40) of fixed size, the or each data consumer system (16) being able to determine the size of the data capsule (40), the size and/or position of the identifier (42), the refresh indicator (44), optionally the functional data packet (46) or/and the integrity check result (48) in the data capsule (40), from a semantic or mapping table linking the predefined identifier to the size of the data capsule (40), the size and/or position of the identifier (42), the refresh indicator (44), possibly the functional data packet (46) or/and the integrity check result (48) in the data capsule (40).

5. The transfer system (10) according to any one of the preceding claims, wherein the or each data consumer system (16) is able to determine a refresh increment for each data capsule (40) received from the refresh indicator (44) of the data capsule (40) and from the refresh indicator (44) of a previously received data capsule (40), the or each data consumer system (16) being able to determine a refresh state of the data capsule (40) between an expected refresh state and an inadequate refresh state depending on the refresh increment, and depending on of the capsule generation frequency, the capsule transfer frequency and/or the capsule receiving frequency.

6. The transfer system (10) according to claim 5, wherein the or each data consumer system (16) is able to verify from the capsule identifier (42) that the data producer system (14) that issued the data capsule (40) is the data producer system expected to issue the data capsule (40), the or each data consumer system (16) being able to place the data capsule (40) in a valid state for use of the data contained therein when the data capsule (40) is from the expected data producing system (14), in the integrity state and in the expected refresh state.

7. The transfer system (10) according to claim 5 or 6, wherein the or each data consumer system (16) is adapted to place into the invalid state a data capsule (40) that is not from the expected data producer system (14), which is not in the integrity state or which is not in the expected refresh state, and to keep in the invalid state those data capsules (40) that follow a data capsule (40) placed into the invalid state, the or each data consumer system (16) being able to return at least one data capsule (40), following a plurality of capsules held in the invalid state. into the valid state when the data capsules (40) held in the invalid state are from the expected data producer system (14), in the integrity state and in the expected refresh state for a predefined reset period.

8. The transfer system (10) according to any one of the preceding claims, wherein the plurality of words (50A to 50F) includes at least one functional data word (50B to 50D) containing functional data of the functional data packet (46).

9. The transfer system (10) according to any of the preceding claims, wherein the data producer system (14) is able to process the integrity check result (48) by adopting a memory representation (80) from the data to be distributed in the words (50A to 50F) intended to transfer the data capsule (40), the or each data consumer system (16) being able to reconstitute the memory representation (80) processed by the data producer system (14) from the data retrieved from the words (50A to 50F) of the data capsule (40), and wherein each word (50A to 50F) optionally includes transfer protocol characteristic fields (52, 54, 60), at least some of the data in the transfer protocol characteristic fields (52, 54, 60) being substituted or deleted in the memory representation (80).

10. A data producer system (14) for a data transfer system (10) of an aircraft (12), the data producer system (14) being able to generate data at successive times;
wherein the data producer system (14) is able to generate a data capsule (40) at each data processing, each data capsule (40) comprising an identifier (42) of the data producer, a refresh indicator (44) updated at each data processing, possibly a functional data packet (46) and a result (48) of a data integrity check relating to the identifier (42), the refresh indicator (44) and possibly the functional data packet (46);
each data capsule (40) being able to be transferred to a data consumer system (16) via a transfer link (18),
wherein the transfer link (18) implements a word-generating transfer protocol (50), each data capsule (40) being issued using a plurality of words (50A to 50F),
wherein the plurality of words (50A to 50F) includes:
- at least one identification word (50A), comprising the identifier (42) and/or the refresh indicator (44),
- at least one integrity check word (50E, 50F), containing the integrity check result (48A), wherein the plurality of words (50A to 50F) comprises at least two separate integrity check words (50E, 50F), each integrity check word (50E, 50F) containing a part of the integrity check result (48).

11. A data consumer system (16), for use in a data transfer system (10) of an aircraft (12), the or each data consumer system (16) being able to receive data capsules (40), each data capsule including a data producer identifier (42) a refresh indicator (44) updated at each data processing, possibly a functional data packet (46) and a result of the data integrity check on at least the identifier (42), the refresh indicator (44) and possibly the data packet (46);
each data capsule (40) being able to be transferred to the data consumer system (16) via the transfer link (18);
the or each data consumer system (16) being able to retrieve each data capsule (40) to extract the identifier (42), the refresh indicator (44), possibly the functional data packet (46) and the integrity check result (48), and to check the integrity of the data of the data capsule (40) by establishing a new integrity check result from at least the identifier (42) the refresh indicator (44) and optionally the functional data packet (46) retrieved from the data capsule (40) and by comparing the new integrity check result to the integrity check result (48) retrieved from the data capsule (40), the data capsule (40) being in an integrity state when the new integrity check result matches the integrity check result (48) retrieved from the data capsule (40),
wherein the transfer link (18) implements a word-generating transfer protocol (50), each data capsule (40) being issued using a plurality of words (50A to 50F),
wherein the plurality of words (50A to 50F) includes:
- at least one identification word (50A), comprising the identifier (42) and/or the refresh indicator (44),
- at least one integrity check word (50E, 50F), containing the integrity check result (48A), wherein the plurality of words (50A to 50F) comprises at least two separate integrity check words (50E, 50F), each integrity check word (50E, 50F) containing a part of the integrity check result (48).

12. A method for transferring aircraft data (12) comprising the following steps:
- a data generating system (14) generating data at successive times;
- transferring the data between the data producing system (14) and at least one data consuming system (16) via a data transfer link (18);
- the or each data consumer system (16) receiving and using data produced by the data producer system (14), after integrity checking;
at least one of the data producer system (14) and the or each data consumer system (16) being on-board within an aircraft (12)
comprising the following steps:
- at each data processing, generating, via the data producer system (14) a data capsule (40), each data capsule (40) comprising an identifier (42) of the data producer (14), a refresh indicator (44) updated at each data build, optionally a functional data packet (46), and a data integrity check result (48) relating to the identifier (42), the refresh indicator (44) and optionally the functional data packet (46);
- transferring each data capsule (40) to the data consumer system via the transfer link (18);
- the or each data consumer system (16) retrieving each data capsule (40) to extract the identifier (42), the refresh indicator (44), optionally the functional data packet (46), and the integrity check result (48), and
- the or each data consumer system (16) checking the integrity of the data in the data capsule (40) by establishing a new integrity check result from at least the identifier (42), the refresh indicator (44) and optionally the functional data packet (46) retrieved from the data capsule (40) and comparing the new integrity check result to the integrity check result (48) retrieved from the data capsule (40);
- assigning the data capsule (40) an integrity status when the new integrity check result matches the integrity check result (48) retrieved from the data capsule (40),
wherein the transfer link (18) implements a word-generating transfer protocol (50), each data capsule (40) being issued using a plurality of words (50A to 50F),
wherein the plurality of words (50A to 50F) includes:
- at least one identification word (50A), comprising the identifier (42) and/or the refresh indicator (44),
- at least one integrity check word (50E, 50F), containing the integrity check result (48A), wherein the plurality of words (50A to 50F) comprises at least two separate integrity check words (50E, 50F), each integrity check word (50E, 50F) containing a part of the integrity check result (48).

13. The method according to claim 12, comprising the or each data consumer system (16) determining a refresh increment for each data capsule (40) received, from the refresh indicator (44) of the data capsule (40) and from the refresh indicator (44) of a previously received data capsule (40), and the or each data consumer system (16) determining a refresh state of the data capsule (40), between an expected refresh state and an inadequate refresh state depending on the refresh increment and on the capsule generation frequency, capsule transfer frequency and/or capsule receiving frequency.

14. The method according to claim 13, comprising the or each data consumer system (16) verifying from the capsule identifier (42) that the data producer system (14) that issued the data capsule (40) is the data producer system expected to issue the data capsule (40) and placing the data capsule (40) in a valid state for use of the data therein when the data capsule (40) is from the expected data producer system (14), in the integrity state and in the expected refresh state.
